# EUROPÄISCHE PATENTSCHRIFT

(11) **EP 2 469 078 B1**
(45) Veröffentlichungstag und Bekanntmachung des Hinweises auf die Patenterteilung: **14.10.2015**
(21) Anmeldenummer: 11009769.8
(22) Anmeldetag: 09.12.2011
(51) Int. Cl.: F03D 3/00, F03D 3/04, F03D 9/00, F03D 3/02

(54) **Windkraft-Hybridrotor**
Wind energy hybrid rotor
Rotor hybride à énergie éolienne

(30) Priorität: 22.12.2010 DE 102010055687
(43) Veröffentlichungstag der Anmeldung: 27.06.2012
(73) Patentinhaber: Airbus Defence and Space GmbH, 85521 Ottobrunn (DE)
(72) Erfinder: Seifert, Jost, 81927 München (DE)

(56) Entgegenhaltungen:
- EP-A2- 2 098 723
- WO-A1-2006/039727
- DE-A1- 3 501 807
- DE-U1-212008 000 104

## Beschreibung

Die vorliegende Erfindung betrifft einen Windkraft-Hybridrotor, eine Windkraftanlage mit einem Hybridrotor, die Verwendung eines Windkraft-Hybridrotors in einer Windkraftanlage und ein Verfahren zum Umwandeln von Windenergie in Antriebsenergie zur Verrichtung von Arbeit.

Rotoren werden bei Windkraftanlagen verwendet, um die Windenergie beispielsweise zur Erzeugung elektrischer Energie nutzen zu können. Die Rotoren werden durch den Wind in Rotation versetzt und treiben dabei z.B. einen Generator an, d.h., die Windenergie wird zumindest zu einem Teil in elektrische Energie umgewandelt. Neben dem Einsatz zur Erzeugung elektrischer Energie werden Rotoren bei Windkraftanlagen insbesondere auch zur Verrichtung von Arbeit, beispielsweise Pump- oder Förderarbeiten, eingesetzt. Windkraftanlagen eignen sich beispielsweise für den Einsatz in wenig erschlossenen oder nur sehr gering besiedelten Gebieten, beispielsweise zur dezentralen Energieversorgung. Daneben kommt dem Einsatz von Windkraftanlagen auch eine zunehmende Bedeutung im Zusammenhang mit den Bemühungen um die Nutzung regenerativer Energiequellen zu.

Aus der WO 2006/039727 A1 ist eine Windkraftanlage mit vertikalem Schaft bekannt, bei der ein Querstromrotor vorgesehen ist, der mit Strömungsleitvorrichtungen ausgestattet ist, die im Bereich der sich der Windanströmung entgegen gesetzt drehenden Rotorblättern diese abschirmen und statt dessen einen zusätzlichen Teil der Windanströmung den Rotorblättern in deren Rotationsrichtung zuführen.

Es besteht ein Bedarf für eine möglichst effiziente Ausnutzung der Windenergie.

Dies wird durch einen Windkraft-Hybridrotor, eine Windkraftanlage, die Verwendung eines Hybridrotors in einer Windkraftanlage sowie durch ein Verfahren nach einem der unabhängigen Ansprüche erreicht. Beispielhafte Ausführungsformen sind in den abhängigen Ansprüchen dargestellt.

Gemäß einer beispielhaften Ausführungsform der Erfindung ist ein Windkraft-Hybridrotor mit einem Querstromrotor, einer Leitvorrichtung und einem Magnusrotor vorgesehen. Der Querstromrotor ist um eine Drehachse drehend gehalten und weist eine Vielzahl von axial verlaufenden Rotorblättern auf. Die Leitvorrichtung weist ein Gehäusesegment auf, das den Querstromrotor in Umfangsrichtung teilweise derart umgibt, dass der Querstromrotor durch anströmenden Wind antreibbar ist. Der Magnusrotor ist innerhalb des Querstromrotors angeordnet, wobei die Magnusrotorachse in Richtung der Drehachse verläuft. Der Magnusrotor weist eine geschlossene Mantelfläche auf und ist durch eine Antriebsvorrichtung um die Magnusrotorachse drehend antreibbar.

Durch die Kombination eines Querstromrotors mit einem Magnusrotor wird eine effizientere Ausnutzung der Windkraft zur Verfügung gestellt, im Vergleich zu einem entsprechenden Querstromrotor alleine.

Gemäß einem Aspekt der Erfindung ist der Magnusrotor ein rotationssymmetrischer Hohlkörper, der durch den Magnuseffekt eine Umlenkung einer Luftströmung bewirkt.

Gemäß dieser Erfindung bewirkt der Querstromrotor eine Zirkulationsströmung. Diese ist eine rotatorische Luftströmung, die gleichzeitig mit einer translatorischen Luftströmung überlagert wird. Bei dieser wiederum handelt es sich um die durch die Windanströmung verursachte Queranströmung. Diese Kombinationsströmung bewirkt an einem der Kombinationsströmung ausgesetzten geometrischen Körper den Magnuseffekt. Der Körper wird daher als Magnuskörper bezeichnet.

Bei der Kombinationsströmung kann die rotatorische Luftströmung auch zusätzlich dadurch erzeugt bzw. unterstützt werden, dass der Magnuskörper drehend angetrieben wird. Die Rotation des Magnuskörper, bzw. Magnus-Rotors führt zu einer stärkeren Ausprägung des Magnuseffekts und führt damit auch zu einer stärkeren Umlenkung der Luftströmung gemäß der Erfindung.

Ausschlaggebend für den Magnuseffekt ist die Relativbewegung zwischen der Oberfläche des Magnuskörpers und der Kombinationsströmung mit der erwähnten Querum- bzw. Queranströmung und der Zirkulationsströmung.

Es sei ausdrücklich darauf hingewiesen, dass z.B. ein feststehender Magnuskörper, beispielsweise ein feststehender Zylinder aufgrund des sich drehenden Querstromrotors in Kombination mit der Wind-Luftströmung bereits einen Magnuseffekt hervorrufen kann.

Beispielsweise ist der Magnusrotor mit einem über die Rotationsachse gleichbleibenden kreisförmigen Querschnitt, d.h. Durchmesser ausgebildet, also in Form eines Zylinders in geometrischem Sinne.

Beispielsweise kann der Magnusrotor auch mit einem sich über die Rotationsachse gleichmäßig verändernden kreisförmigen Durchmesser ausgebildet sein, d.h. als Kegelstumpf.

Beispielsweise kann der Magnusrotor einen über die Rotationsachse parabelförmig zu- und wieder abnehmenden Durchmesser aufweisen. Beispielsweise ist der Magnusrotor eine Kugel.

Beispielsweise kann der Magnusrotor auch aus unterschiedlichen Kegelstumpfsegmenten und/oder Zylindersegmenten zusammengesetzt sein.

Gemäß einem weiteren Aspekt der Erfindung ist der Magnusrotor in der Drehrichtung des Querstromrotors antreibbar.

Gemäß einem weiteren Aspekt ist der Magnusrotor entgegen der Drehrichtung des Querstromrotors antreibbar.

Gemäß einem weiteren Aspekt der Erfindung sind die Drehachse und die Magnusrotorachse quer zur Anströmungsrichtung des Windes angeordnet.

Gemäß einem weiteren Aspekt der Erfindung verläuft die Magnusrotorachse parallel zur Drehachse des Querstromrotors.

Gemäß einem weiteren Aspekt der Erfindung ist der Magnusrotor konzentrisch mit dem Querstromrotor angeordnet.

Gemäß einem alternativen Aspekt der Erfindung ist die Magnusrotorachse zur Drehachse des Querstromrotors geneigt ausgebildet, wobei die Magnusrotorachse eine Ebene mit der Drehachse aufspannt. Gemäß einem weiteren Aspekt der Erfindung können die Magnusrotorachse und die Drehachse des Querstromrotors aber auch derart geneigt zueinander angeordnet sein, dass sie in unterschiedlichen Ebenen liegen, d.h., nicht in einer gemeinsamen Ebene.

Gemäß einem weiteren Aspekt der Erfindung schirmt das Gehäusesegment den Querstromrotor mit Bezug zur Drehachse des Querstromrotors auf der Luvseite auf einer Seite der Drehachse ab.

Gemäß einem weiteren Aspekt der Erfindung ist die Luvseite durch eine Linie in zwei Segmente unterteilt, wobei die Linie in Anströmrichtung verläuft und die Drehachse schneidet.

Gemäß einem weiteren Aspekt der Erfindung weist das Gehäusesegment auf der dem Querstromrotor zugewandten Seite eine Kreisbogenform auf.

Gemäß einem weiteren Aspekt der Erfindung ist das Gehäusesegment auf der gesamten Länge des Magnusrotors mit der gleichen Querschnittsform ausgebildet.

Gemäß einem alternativen Aspekt der Erfindung weist das Gehäusesegment über die Länge des Magnusrotors unterschiedliche Querschnittsformen auf. Dadurch ist es beispielsweise möglich, zusätzliche Lenkungswirkungen in Bezug zur Anströmung zur Verfügung zu stellen, z.B. in Abhängigkeit von der jeweiligen Lage, bezogen auf die Anströmung.

Gemäß einem weiteren Ausführungsbeispiel der Erfindung bewirkt der Magnusrotor bei Rotation auf seiner Leeseite mit Bezug zur Anströmrichtung eine Umlenkung des Luftstroms.

Gemäß einem weiteren Aspekt der Erfindung erfolgt die Umlenkung ab einer Umfangsgeschwindigkeit des Magnusrotors, die vorzugsweise größer als die Anströmgeschwindigkeit des Windkraft-Hybridrotors ist.

Gemäß einem weiteren Ausführungsbeispiel der Erfindung erfolgt die Umlenkung derart, dass ein den Querstromrotor durchströmender Luftstrom auf die Rotorblätter in einem erweiterten Kreisbogen einwirkt und diese antreibt.

Gemäß einem weiteren Aspekt der Erfindung bewirkt die Umlenkung, dass der den Querstromrotor durchströmende Luftstrom auf die Rotorblätter in einem zusätzlichen Kreisbogensegment von bis zu 90° einwirkt.

Gemäß einem weiteren Aspekt der Erfindung verlaufen die Rotorblätter in axialer Richtung parallel zur Drehachse, d.h., sie weisen einen konstanten Abstand zur Drehachse auf.

Gemäß einem alternativen Aspekt der Erfindung verlaufen die Rotorblätter in axialer Richtung zur Drehachse geneigt, wobei die Rotorblätter einen zu- oder abnehmenden Abstand zur Drehachse aufweisen, d.h., die Rotorblätter verlaufen jeweils in einer Ebene mit der Drehachse, jedoch geneigt zur Drehachse.

Gemäß einem weiteren Aspekt der Erfindung weist der Querstromrotor eine Rotordrehachse auf, und die Rotorblätter sind an einer mitrotierenden Tragstruktur gehalten, die an der Rotordrehachse befestigt ist.

Gemäß einem weiteren Aspekt der Erfindung sind die Rotorblätter auf die tangentiale Winkellage bezogen feststehend ausgebildet.

Gemäß einem weiteren Ausführungsbeispiel der Erfindung weisen die Rotorblätter im Querschnitt jeweils eine gebogene Form mit einer konkaven und einer konvexen Seite auf, wobei die konkave Seite dem Magnusrotor zugewandt ist.

Gemäß einem weiteren Aspekt der Erfindung weisen die Rotorblätter im Querschnitt jeweils einen Winkel von 15° bis 70° zur Radialrichtung auf. Beispielsweise weisen die Rotorblätter im Querschnitt jeweils einen Winkel von 30° zur Radialrichtung auf. Der Begriff Radialrichtung bezieht sich auf eine Verbindungslinie zwischen der Rotorachse und der Mitte des Querschnitts des Rotorblatts, und die Richtung im Querschnitt bezieht sich bei einer gebogenen Querschnittsform auf die Tangentialrichtung.

Gemäß einem weiteren Aspekt der Erfindung sind mindestens zwei, vorzugsweise 16 Rotorblätter vorgesehen.

Gemäß einem weiteren Aspekt der Erfindung ist zwischen der Mantelfläche des Magnusrotors und den rotierenden Rotorblättern in radialer Richtung ein Abstand vorgesehen, der vom Durchmesser des Magnusrotors abhängig ist.

Beispielsweise ist der Durchmesser des Magnusrotors genauso groß bis doppelt so groß wie der Abstand der Mantelfläche zu den Rotorblättern.

Gemäß einem weiteren Beispiel beträgt das Verhältnis von Durchmesser des Magnusrotors und Abstand zu den Rotorblättern 2:1.

Gemäß einem Aspekt der Erfindung können die Profiltiefe und die Krümmung der Rotorblätter frei gewählt werden, wobei diese beiden Parameter bezogen auf die

Wirkung in Beziehung zueinander stehen. Bei sehr geringer Profiltiefe und entsprechend geringem Abstand tritt die Krümmung des einzelnen Rotorblatts in den Hintergrund. Außerdem kann der Durchmesser des Querstromrotors festgelegt werden. Die Anzahl der Rotorblätter wiederum steht im Zusammenhang mit dem Durchmesser des Querstromrotors und der Profiltiefe. Sind diese Größen festgelegt, ist auch der lichte Durchmesser des Querstromrotors bekannt, also der Abstand der Rotorblätter vom Mittelpunkt. Der Durchmesser des Magnuskörpers, z.B. eines Zylinders, ergibt sich dann aus dem oben genannten Verhältnis von Abstand zwischen den Rotorblättern und der Mantelfläche des Magnuskörpers zu Durchmesser des Magnuskörpers.

Gemäß einem weiteren Aspekt der Erfindung ist zwischen der Mantelfläche des Magnusrotors und den rotierenden Rotorblättern in radialer Richtung ein Abstand vorgesehen, der das Ein- bis Zweifache einer Profiltiefe eines Rotorblatts beträgt, wobei die Profiltiefe unabhängig von der Winkellage gemessen ist.

Gemäß einem weiteren Aspekt der Erfindung sind die Rotorblätter des Querstromrotors entlang einer Kreislinie um die Drehachse angeordnet, wobei der Kreis einen Durchmesser aufweist, der ungefähr das Fünf- bis Achtfache der Profiltiefe eines Rotorblatts beträgt.

Gemäß einem weiteren Aspekt der Erfindung ist ein Umfangsabstand der Rotorblätter zueinander vorgesehen, der mindestens so groß ist wie die Profiltiefe der Rotorblätter.

Gemäß einem weiteren Aspekt der Erfindung sind die axial verlaufenden Rotorblätter in Rotorblättersegmente unterteilt und auf die gesamte Länge unterschiedlich ausgebildet.

Gemäß einem weiteren Aspekt der Erfindung ist der Magnusrotor in Magnusrotorsegmente unterteilt, die unterschiedlich schnell antreibbar sind.

Gemäß einem weiteren Aspekt der Erfindung weist der Magnusrotor im Bereich seiner Enden jeweils eine über die Magnusrotorumfangsfläche hinausstehende Endscheibe auf.

Gemäß einem weiteren Aspekt der Erfindung weist der Magnusrotor eine Vielzahl von Scheiben auf, die zwischen den beiden Endscheiben angeordnet sind. Die Scheiben weisen einen größeren Durchmesser auf als die benachbarten Mantelflächensegmente des Magnusrotors.

Gemäß einem weiteren Aspekt der Erfindung bildet der Querstromrotor einen vom Wind antreibbaren Repeller.

Gemäß einem weiteren Ausführungsbeispiel der Erfindung ist der Magnusrotor mit einer Umfangsgeschwindigkeit angetrieben, die das ca. Ein- bis Vierfache der Anströmgeschwindigkeit des Windkraft-Hybridrotors beträgt.

Gemäß einem weiteren Aspekt der Erfindung weist der Querstromrotor eine Umfangsgeschwindigkeit auf, die ca. 50% der Anströmgeschwindigkeit des Windkraft-Hybridrotors beträgt.

Gemäß einem weiteren Aspekt der Erfindung beträgt das Rotationsverhältnis zwischen dem Querstromrotor und dem Magnusrotor ca. 1:2 bis 1:8.

Gemäß einem weiteren Aspekt der Erfindung beträgt das Verhältnis von Anströmgeschwindigkeit des Windkraft-Hybridrotors / Umfangsgeschwindigkeit des Querstromrotors / Umfangsgeschwindigkeit des Magnusrotors ca. 0,5 / 1 /1-4.

Gemäß einem weiteren Aspekt der Erfindung ist zwischen dem Querstromrotor und dem Magnusrotor ein Getriebe vorgesehen.

Gemäß einem weiteren Aspekt der Erfindung ist das Übersetzungsverhältnis des Getriebes veränderbar, beispielsweise in Stufen oder stufenlos, z.B. in Abhängigkeit der Windstärke.

Gemäß einem weiteren Aspekt der Erfindung treibt die Windkraft den Magnusrotor an.

Gemäß einem weiteren Ausführungsbeispiel der Erfindung treibt der Querstromrotor den Magnusrotor an.

Dies kann beispielsweise über das Getriebe erfolgen.

Gemäß einem weiteren Aspekt der Erfindung stellt der Querstromrotor Energie zur Verfügung, um den Magnusrotor anzutreiben, z.B. mittels einer elektrischen Antriebslösung des Magnusrotors.

Gemäß einem weiteren Aspekt der Erfindung wird zum Anlaufen des Windkraft-Hybridrotors der Magnusrotor elektrisch angetrieben, um ein Anlaufen auch bei geringeren Windverhältnissen zu ermöglichen.

Gemäß einem weiteren Aspekt der Erfindung weist das Gehäusesegment einen Verstellmechanismus auf und ist wenigstens mit Bezug zur Drehachse des Querstromrotors verschwenkbar ausgebildet.

Gemäß einem weiteren Ausführungsbeispiel der Erfindung ist der Verstellmechanismus in Abhängigkeit einer Anströmrichtung derart einstellbar, dass das Gehäusesegment den Querstromrotor mit Bezug zur Drehachse des Querstromrotors auf der Luvseite auf einer Seite der Drehachse abschirmt.

Gemäß einem weiteren Aspekt der Erfindung weist der Verstellmechanismus einen Windsensor auf.

Gemäß einem weiteren Aspekt der Erfindung ist der Windsensor eine Windfahne, die mit dem Verstellmechanismus gekoppelt ist.

Gemäß der Erfindung ist auch eine Windkraftanlage vorgesehen, die eine Rotoreinrichtung zur Umwandlung von Windbewegung in eine Drehbewegung, eine Arbeitsvorrichtung zur Umwandlung der Bewegungsenergie der Drehbewegung in zu verrichtende Arbeit und eine Getriebevorrichtung zur Kopplung der Rotoreinrichtung an die Antriebsvorrichtung zur Übertragung der Drehbewegung an die Arbeitsvorrichtung aufweist. Dabei weist die Rotoreinrichtung wenigstens einen Windkraft-Hybridrotor nach einem der vorhergehenden Ausführungsbeispiele oder Aspekte der Erfindung auf.

Gemäß einem weiteren Ausführungsbeispiel der Erfindung handelt es sich bei der Arbeitsvorrichtung um einen Stromgenerator zur Erzeugung elektrischer Energie.

Gemäß einem weiteren Ausführungsbeispiel der Erfindung handelt es sich bei der Arbeitsvorrichtung um eine Pumpenvorrichtung, beispielsweise zur Förderung von Trinkwasser oder zum Pumpen von Wasser für Bewässerungsanlagen, oder auch für Drainagezwecke, d.h. zum Abpumpen.

Gemäß einem weiteren Aspekt der Erfindung handelt es sich bei der Arbeitsvorrichtung beispielsweise um eine Mühleneinrichtung zur Verrichtung von Mühlenarbeit, zum Beispiel zum Antreiben von Mahlvorgängen, Sägevorgängen, Schleifvorgängen etc.

Gemäß einem weiteren Aspekt der Erfindung ist eine Kombination der genannten Arbeitsvorrichtungen vorgesehen.

Gemäß einem weiteren Aspekt der Erfindung ist die Rotorachse vertikal angeordnet, d.h., sowohl die Drehachse des Querstromrotors als auch die Magnusrotorachse verlaufen vertikal.

Gemäß einem alternativen Aspekt der Erfindung ist die Rotorachse horizontal angeordnet.

Gemäß einem weiteren Aspekt der Erfindung kann der Windkraft-Hybridrotor zu einer Anströmrichtung ausgerichtet werden, beispielsweise insbesondere, wenn die Rotorachse horizontal angeordnet ist.

Gemäß einem weiteren Aspekt der Erfindung weist die Windkraftanlage eine Tragkonstruktion auf, an welcher die Rotoreinrichtung, die Getriebevorrichtung und die Arbeitsvorrichtung, zum Beispiel ein Generator, gehalten sind.

Gemäß einem weiteren Aspekt der Erfindung ist die Tragkonstruktion in einem Fundament im Erdboden verankert.

Gemäß einem alternativen Aspekt der Erfindung ist die Tragkonstruktion an einer baulichen Struktur verankert, zum Beispiel an einem Bauwerk, wie beispielsweise einem Gebäude oder einem Brückenbauwerk.

Gemäß der Erfindung ist auch die Verwendung eines Windkraft-Hybridrotors nach einem der vorhergehenden Ausführungsbeispiele und Aspekte der Erfindung in einer Windkraftanlage vorgesehen.

Gemäß der Erfindung ist auch ein Verfahren zum Umwandeln von Windenergie in Antriebsenergie zur Verrichtung von Arbeit vorgesehen, das die folgenden Schritte umfasst, die auch als Vorgänge oder Abläufe bezeichnet werden können und gleichzeitig stattfinden:
a) Rotieren eines Querstromrotors, der um eine Drehachse drehend gehalten ist und eine Vielzahl von axial verlaufenden Rotorblättern aufweist; wobei eine Leitvorrichtung vorgesehen ist, die ein Gehäusesegment aufweist, das den Querstromrotor in Umfangsrichtung teilweise derart umgibt, dass der Querstromrotor durch anströmenden Wind angetrieben wird.
b) Rotieren eines Magnusrotors, der innerhalb des Querstromrotors angeordnet ist und dessen Magnusrotorachse in Richtung der Drehachse verläuft; wobei der Magnusrotor eine geschlossene Mantelfläche aufweist und durch eine Antriebsvorrichtung um die Magnusrotorachse angetrieben wird.
c) Antreiben einer Arbeitsvorrichtung durch den Querstromrotor.

Dabei lenkt der Magnusrotor in Schritt b) auf seiner Leeseite mit Bezug zur Anströmrichtung derart um, dass der den Querstromrotor durchströmende Luftstrom in Schritt a) auf die Rotorblätter in einem erweiterten Kreisbogen einwirkt.

Gemäß einem weiteren Aspekt der Erfindung lenkt der Magnusrotor in Schritt b) den Luftstrom durch Rotieren ab einer Umfangsgeschwindigkeit um, die größer als die Anströmgeschwindigkeit des Windkraft-Hybridrotors ist.

Der Drehsinn des Magnusrotors erfolgt dabei vorzugsweise in Drehrichtung des Querstromrotors, beispielsweise mit einer 0- bis 4-fachen Drehgeschwindigkeit bezogen auf die Geschwindigkeit der anströmenden Luft, d.h. bezogen auf die lokale Windgeschwindigkeit.

Gemäß einem weiteren Aspekt der Erfindung ist vorgesehen, dass der Magnusrotor gegen die Drehrichtung des Querstromrotors rotieren kann, z.B. je nach Ausgestaltung des Querstromrotors.

Beispielsweise kann das Rotieren des Magnusrotors gegen die Drehrichtung des Querstromrotors und somit ein gegenläufiges Rotieren der beiden Rotoren vorgesehen sein, z.B. um bei zu starkem Wind ein Bremsen zu ermöglichen.

Gemäß einem weiteren Aspekt der Erfindung sind Maßnahmen zur Veränderung der Oberflächenrauhigkeit vorgesehen, z.B. ist diese erhöht durch eine spezielle Oberflächenstruktur. Dadurch lässt sich je nach zu erwartenden Windgeschwindigkeiten die Laminarströmung bzw. Grenzschichtströmung beeinflussen.

Beispielsweise kann die Oberfläche des Magnusrotors eine Vielzahl von Vertiefungen aufweisen, z.B. eine Vielzahl von Dellen oder Dimpeln.

Beispielsweise kann die Oberfläche auch eine Vielzahl von aus der Fläche hervorstehenden Erhebungen aufweisen, z.B. lineare oder punktförmige Erhebungen.

Aufgrund der Umlenkung erfolgt also eine bessere Ausnutzung der Windenergie, d.h., der Rotor weist eine insgesamt größere Effizienz auf. Aufgrund des Magnuseffekts ist die Effizienz auch trotz der notwendigen Energie zum Antreiben des Magnusrotors gegeben.

Gemäß einem weiteren Aspekt der Erfindung handelt es sich bei der zu verrichtenden Arbeit um die Erzeugung von elektrischem Strom.

Gemäß einem weiteren Aspekt der Erfindung handelt es sich bei der zu verrichtenden Arbeit um das Pumpen von Wasser.

Gemäß einem weiteren Aspekt der Erfindung handelt es sich bei der zu verrichtenden Arbeit um Mühlenarbeiten.

Gemäß einem weiteren Aspekt der Erfindung handelt es sich bei der Arbeitsvorrichtung um einen Stromgenerator, und zwischen dem Querstromrotor und dem Stromgenerator ist eine Getriebevorrichtung vorgesehen, mit der die Bewegung vom rotierenden Querstromrotor auf die Arbeitsvorrichtung übertragen wird.

Gemäß einem weiteren Aspekt der Erfindung wird der Querstromrotor durch das Gehäusesegment in Schritt a) mit Bezug zur Drehachse des Querstromrotors auf der Luvseite auf einer Seite der Drehachse abgeschirmt.

Gemäß einem weiteren Aspekt der Erfindung wird der Magnusrotor in Schritt b) durch den Querstromrotor angetrieben, beispielsweise durch direkte Kopplung über ein Getriebe oder über einen elektrischen Antrieb des Magnusrotors, wobei die elektrische Energie durch einen Generator erzeugt wird, der vom Querstromrotor angetrieben wird.

Es sei darauf hingewiesen, dass die Merkmale der Ausführungsbeispiele und Aspekte der Vorrichtungen auch für Ausführungsformen und Aspekte des Verfahrens sowie Verwendung der Vorrichtung gelten und umgekehrt. Außerdem können auch diejenigen Merkmale frei miteinander kombiniert werden, bei denen dies nicht explizit erwähnt ist.

Nachfolgend wird anhand der beigefügten Zeichnungen näher auf Ausführungsbeispiele der Erfindung eingegangen. Es zeigen:
- **Fig. 1**: eine Windkraftanlage gemäß einem ersten Ausführungsbeispiel der Erfindung;
- **Fig. 2**: ein weiteres Ausführungsbeispiel einer Windkraftanlage gemäß der Erfindung;
- **Fig. 3**: ein weiteres Ausführungsbeispiel einer Windkraftanlage gemäß der Erfindung;
- **Fig. 4**: ein weiteres Ausführungsbeispiel einer Windkraftanlage gemäß der Erfindung;
- **Fig. 5**: ein weiteres Ausführungsbeispiel einer Windkraftanlage gemäß der Erfindung;
- **Fig. 6**: ein weiteres Ausführungsbeispiel einer Windkraftanlage gemäß der Erfindung;
- **Fig. 7**: ein weiteres Ausführungsbeispiel einer Windkraftanlage gemäß der Erfindung;
- **Fig. 8**: ein weiteres Ausführungsbeispiel einer Windkraftanlage gemäß der Erfindung;
- **Fig. 9**: ein Ausführungsbeispiel eines Windkraft-Hybridrotors gemäß der Erfindung;
- **Fig. 10**: ein weiteres Ausführungsbeispiel eines Windkraft-Hybridrotors gemäß der Erfindung;
- **Fig. 11**: ein Ausführungsbeispiel eines Magnusrotors gemäß der Erfindung;
- **Fig. 12**: ein weiteres Ausführungsbeispiel eines Magnusrotors gemäß der Erfindung;
- **Fig. 13**: ein weiteres Ausführungsbeispiel eines Windkraft-Hybridrotors gemäß der Erfindung;
- **Fig. 14**: ein weiteres Ausführungsbeispiel eines Windkraft-Hybridrotors gemäß der Erfindung;
- **Fig. 15**: ein weiteres Ausführungsbeispiel eines Windkraft-Hybridrotors gemäß der Erfindung;
- **Fig. 16**: ein Ausführungsbeispiel für ein Rotorblatt eines Windkraft-Hybridrotors gemäß der Erfindung;
- **Fig. 17**: ein weiteres Ausführungsbeispiel eines Windkraft-Hybridrotors gemäß der Erfindung;
- **Fig. 18**: Ausführungsbeispiele eines Magnusrotors gemäß der Erfindung;
- **Fig. 19**: ein weiteres Ausführungsbeispiel eines Windkraft-Hybridrotors gemäß der Erfindung;
- **Fig. 20**: ein weiteres Ausführungsbeispiel eines Windkraft-Hybridrotors gemäß der Erfindung; und
- **Fig. 21**: ein Ausführungsbeispiel eines Verfahrens zum Umwandeln von Windenergie in Antriebsenergie zur Verrichtung von Arbeit gemäß der Erfindung.

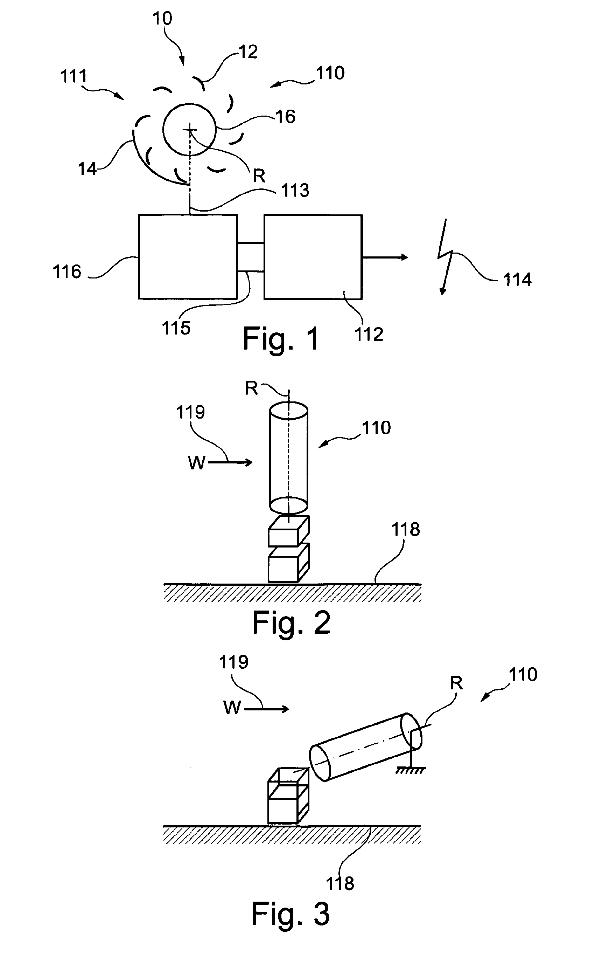

In Fig. 1 ist schematisch eine Windkraftanlage 110 gezeigt, die eine Rotoreinrichtung 111 zur Umwandlung von Windbewegung in eine Drehbewegung und eine Arbeitsvorrichtung 112 zur Umwandlung der Bewegungsenergie der Drehbewegung in zu verrichtende Arbeit 114 aufweist. Außerdem ist eine Getriebevorrichtung 116 zur Kopplung der Rotoreinrichtung an die Antriebsvorrichtung zur Übertragung der Drehbewegung an die Antriebsvorrichtung vorgesehen.

Bei der Arbeitsvorrichtung 112 handelt es sich beispielsweise um einen Generator zur Erzeugung elektrischer Energie, weshalb rechts neben dem Kasten 112 ein Blitzsymbol gezeigt ist, wodurch angedeutet werden soll, dass die Arbeitsvorrichtung 112 elektrische Energie zur Verfügung stellt bzw. elektrischen Strom erzeugt.

Gemäß einem nicht gezeigten Ausführungsbeispiel kann anstelle des Generators für die Arbeitsvorrichtung 112 auch eine Pumpeneinrichtung oder eine Mühleneinrichtung oder deren Kombination vorgesehen sein.

Die Verbindung der Rotoreinrichtung 112 mit der Getriebevorrichtung 116 ist schematisch durch eine erste Verbindungslinie 113 angedeutet. Die Verbindung zwischen der Getriebevorrichtung 116 und der Arbeitsvorrichtung 112 ist schematisch mit einer zweiten Verbindungslinie bzw. einem Verbindungslinienpaar 115 angedeutet.

Gemäß der Erfindung weist die Rotoreinrichtung 111 wenigstens einen Windkraft-Hybridrotor 10 nach einem der nachfolgenden Ausführungsbeispiele auf.

In Fig. 1 ist angedeutet, dass der Windkraft-Hybridrotor 10 einen Querstromrotor 12, eine Leitvorrichtung 14 und einen Magnusrotor 16 aufweist. Weiter ist schematisch eine Rotationsachse mit dem Bezugszeichen R angedeutet, wobei auf die einzelnen Rotationsachsen des Querstromrotors 12 und des Magnusrotors 16 noch näher eingegangen werden soll.

In Fig. 2 ist schematisch gezeigt, dass die Rotationsachse R vertikal angeordnet sein kann, wozu die Windkraftanlage 110 auf einer horizontalen Grundfläche 118 angeordnet ist und die Rotationsachse R senkrecht nach oben weist. Zusätzlich ist angedeutet, dass die Rotationsachse R quer zu einer Anströmungsrichtung des Windes, angedeutet mit Bezugszeichen W und einem schematischen Pfeil 119, ausgerichtet ist.

In Fig. 3 ist ein weiteres Ausführungsbeispiel einer Windkraftanlage 110 gemäß der Erfindung in einer perspektivischen Ansicht gezeigt, bei der die Rotationsachse R horizontal, d.h. im Wesentlichen parallel zu einer Grundfläche, beispielsweise der Grundfläche 118, angeordnet ist. Auch bei dieser Anordnung ist die Rotationsachse quer zur Anströmungsrichtung des Windes W bzw. 119 angeordnet.

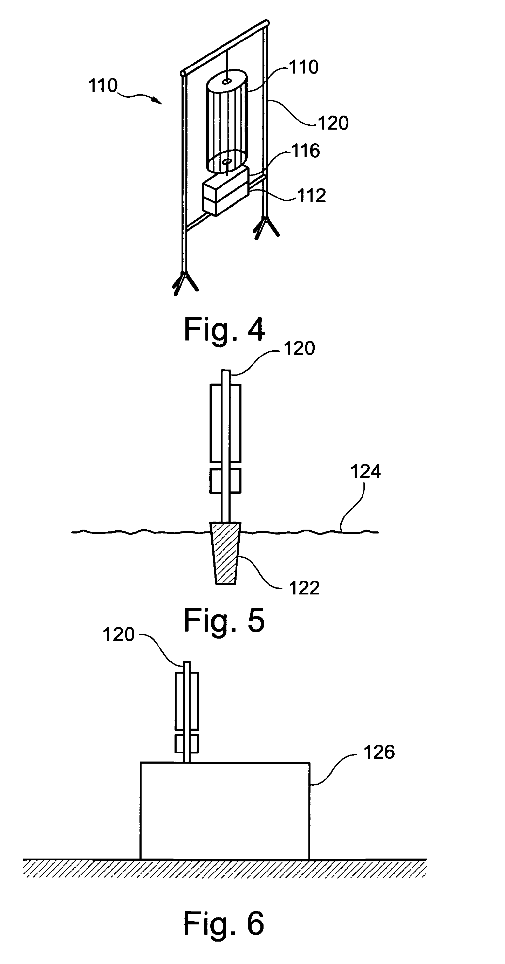

In Fig. 4 ist die Windkraftanlage 110 mit einer Tragkonstruktion 120 gezeigt, an der der Windkraft-Hybridrotor 10, die Getriebevorrichtung 116 und die Arbeitsvorrichtung 112, zum Beispiel ein Generator, gehalten sind.

Gemäß einem Aspekt der Erfindung ist die Tragkonstruktion 120 an einem Fundament 122 im Erdboden 124 verankert, was in Fig. 5 schematisch in einem Vertikalschnitt bzw. einer vertikalen Schnittansicht dargestellt ist.

Gemäß einem weiteren Aspekt der Erfindung kann die Tragkonstruktion 120 auch an einer baulichen Struktur 126 verankert sein, was schematisch in Fig. 6 dargestellt ist.

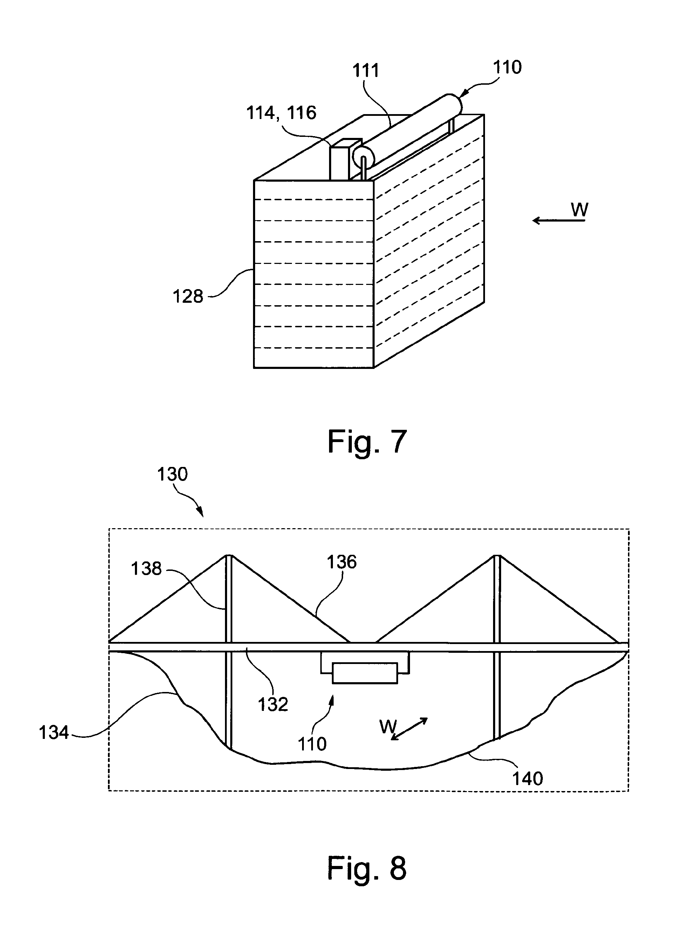

Beispielsweise kann die Windkraftanlage 110 mit der Rotoreinrichtung 111 an einem Bauwerk, wie beispielsweise einem Gebäude 128 angeordnet sein, was in Fig. 7 dargestellt ist. Bei dem Gebäude kann es sich beispielsweise um ein mehrgeschossiges Haus handeln, bei dem die Windkraftanlage 110 an einem seitlichen Rand der Dachfläche, im gezeigten Beispiel an der rechten Seite der Flachdachfläche, angeordnet ist. Dies bietet sich beispielsweise dann an, wenn ein Gebäude einer Hauptwindrichtung ausgesetzt ist. In Fig. 7 ist weiter schematisch die Getriebevorrichtung 16 und die Arbeitsvorrichtung 112 gezeigt.

Gemäß einem nicht gezeigten Beispiel der Erfindung sind die Getriebevorrichtung 16 und die Arbeitsvorrichtung 112 integral ausgebildet.

Wie aus Fig. 6 und Fig. 7 ersichtlich ist, kann die Anordnung auf einem Gebäude derart erfolgen, dass die Rotationsachse entweder vertikal (Fig. 6) oder horizontal (Fig. 7) angeordnet ist.

Selbstverständlich ist es auch möglich, die Rotationsachse geneigt anzuordnen, beispielsweise bei einem geneigten Bauwerk bzw. einer zur Anbringung geeigneten Fläche an einem Bauwerk, die geneigt ausgebildet ist, beispielsweise bei einem geneigten Dach, oder auch bei einer geneigten Bodenfläche.

Gemäß einem weiteren Aspekt der Erfindung kann es sich bei dem Bauwerk auch um ein Brückenwerk 130 handeln oder eine andere Form eines Verkehrs- oder Infrastrukturbauwerks. Beispielsweise kann es sich auch um einen Damm oder auch um Strommasten handeln.

In Fig. 8 ist das Brückenwerk 130 schematisch mit einer horizontal verlaufenden Fahrbahn 132 gezeigt, die über eine Geländevertiefung, beispielsweise ein Tal, hinweg führt. Die Fahrbahn 132 ist mittels einer schematisch angedeuteten Abspannkonstruktion 136 gehalten, die wiederum an einer Mast- bzw. Stützkonstruktionen 138 abgespannt sind.

Beispielhaft ist die Windkraftanlage 110 unterhalb der Fahrbahnkonstruktion 132 gezeigt, um dort durch quer zur Fahrbahn verlaufende Winde, angedeutet mit einem Doppelpfeil 139, angetrieben zu werden. Dies bietet sich beispielsweise dann an, wenn in einer Talsohle 140 starke Winde in Richtung des Talverlaufs vorherrschen, also bezogen auf die Fahrbahn starke Querwinde.

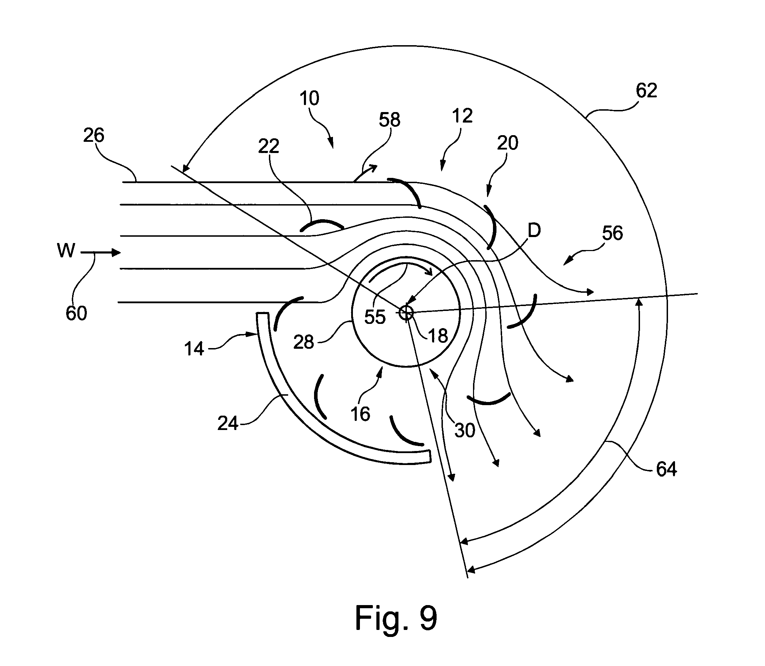

Im Folgenden soll anhand von Fig. 9 auf den Windkraft-Hybridrotor 10 eingegangen werden. Wie bereits oberhalb erwähnt, weist der Windkraft-Hybridrotor 10 den Querstromrotor 12, die Leitvorrichtung 14 und den Magnusrotor 16 auf.

Der Querstromrotor 12 ist um eine Drehachse D, auch mit dem Bezugszeichen 18 gekennzeichnet, drehend gehalten und weist eine Vielzahl 20 von axial verlaufenden Rotorblättern 22 auf.

Die Leitvorrichtung 14 weist ein Gehäusesegment 24 auf, das den Querstromrotor 12 in Umfangsrichtung teilweise derart umgibt, dass der Querstromrotor 12 durch anströmenden Wind *W* antreibbar ist. Der anströmende Wind *W* ist mit einem Windpfeil 60 sowie einer angedeuteten Strömung 26 schematisch gezeigt.

Der Magnusrotor 16 ist innerhalb des Querstromrotors 12 angeordnet, wobei die Magnusrotorachse in Richtung der Drehachse verläuft. Der Magnusrotor 16 weist eine geschlossene Mantelfläche 28 auf und ist durch eine Antriebsvorrichtung 30 (nicht näher gezeigt) um die Magnusrotorachse drehend antreibbar.

Der Magnusrotor 16 ist beispielsweise, mit Bezug zur Darstellung Fig. 9, im Uhrzeigersinn drehbar. Der Querstromrotor 12 ist beispielsweis ebenfalls im Uhrzeigersinn drehbar.

Es kann ebenfalls vorgesehen sein, dass zumindest der Magnusrotor 16 auch gegenläufig, d.h. gegen den Uhrzeigersinn drehbar ist.

Der Windkraft-Hybridrotor 10 ist in Fig. 9 schematisch in einem Querschnitt gezeigt.

Bevor auf die Wirkungsweise bzw. die Strömungsverhältnisse eingegangen wird, soll näher auf einzelne konstruktive Aspekte eingegangen werden.

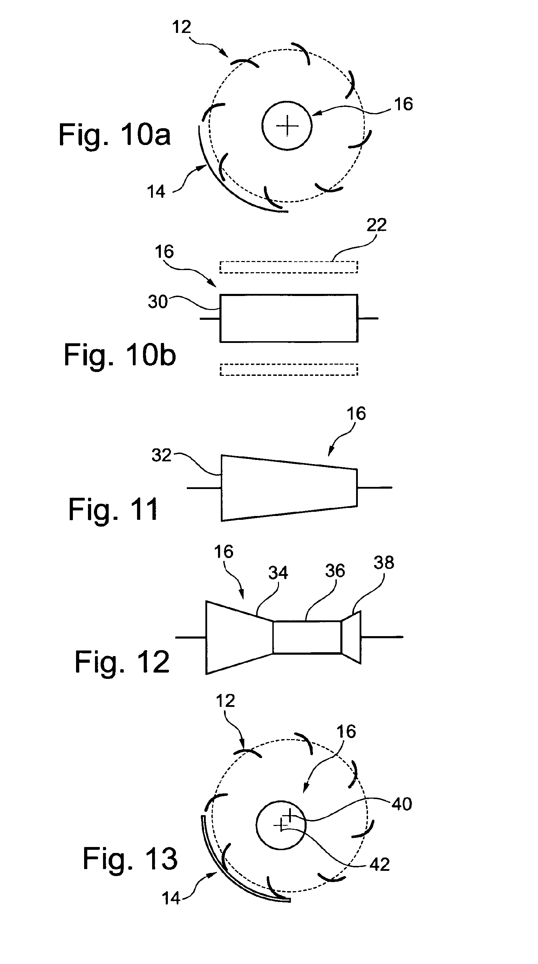

In Fig. 10a ist der Windkraft-Hybridrotor schematisch mit dem Querstromrotor 12, der Leitvorrichtung 14 und dem Magnusrotor 16 im Querschnitt gezeigt. In Fig. 10b ist in einem Längsschnitt der Magnusrotor 16 als ein Zylinder 30 gezeigt, wobei die Rotorblätter 22 des Querstromrotors 12 nur durch gestrichelte Linien angedeutet sind.

Gemäß einem weiteren Ausführungsbeispiel ist der Magnusrotor 16 mit einem sich über die Rotationsachse gleichmäßig verändernden Durchmesser ausgebildet, d.h. einem Kegelstumpf 32, was in Fig. 11 zu sehen ist.

Gemäß einem weiteren Ausführungsbeispiel kann der Magnusrotor 16 auch aus unterschiedlichen Kegelstumpfsegmenten 34, 38 und/oder Zylindersegmenten 36 zusammengesetzt sein, was in Fig. 12 schematisch dargestellt ist.

Gemäß einem Aspekt der Erfindung verläuft die Magnusrotorachse parallel zur Drehachse des Querstromrotors.

Dabei kann der Magnusrotor 16 konzentrisch mit dem Querstromrotor 12 angeordnet sein, wie dies in Fig. 9 der Fall ist.

Gemäß einem weiteren Aspekt der Erfindung kann die Rotationsachse des Querstromrotors 12, in Fig. 13 mit einem Kreuz 40 angedeutet, zu der Rotationsachse des Magnusrotors 16, angedeutet mit einem Mittelpunktkreuz 42, versetzt angeordnet sein. Beispielsweise ist der Magnusrotor 16 innerhalb des Querstromrotors 12 in Richtung der Leitvorrichtung 14 verschoben angeordnet.

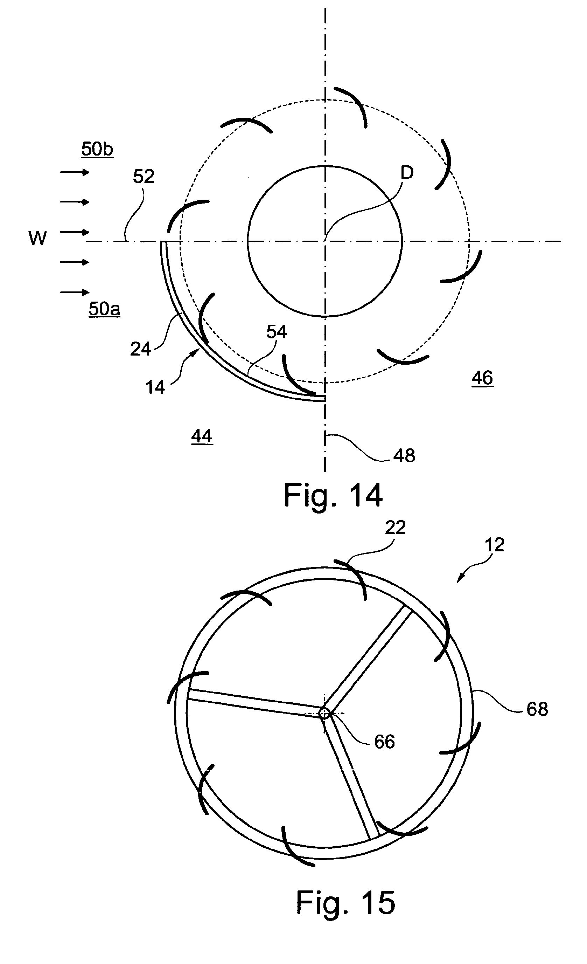

Gemäß einem weiteren Aspekt der Erfindung schirmt das Gehäusesegment 24, d.h. die Leitvorrichtung 14 den Querstromrotor 12 mit Bezug zur Drehachse D des Querstromrotors nach einer dem Wind zugewandten Seite, d.h. der Luvseite, angedeutet mit Bezugszeichen 44, auf einer Seite 50a der Drehachse ab. Dabei ist die Luvseite 44 durch eine Linie 52 in zwei Segmente 50a, 50b unterteilt, wobei die Linie 52 in Anströmrichtung, d.h. parallel zur Windrichtung W verläuft und die Drehachse D schneidet. Mit Bezug auf die Drehachse lässt sich eine zweite Linie 48 durch die Drehachse legen, die quer zur Windrichtung *W* verläuft und bei der sich auf der in Fig. 14 gezeigten Variante die Luvseite 44 links davon befindet, wohingegen sich auf der rechten Seite die Leeseite, angedeutet mit Bezugszeichen 46, befindet.

Beispielsweise ist das Gehäusesegment auf der gesamten Länge des Magnusrotors mit der gleichen Querschnittsform ausgebildet.

Wie in Fig. 14 im Querschnitt zu sehen ist, weist das Gehäusesegment 24 auf der dem Querstromrotor zugewandten Seite 54 eine Kreisbogenform auf, die sich an dem Querstromrotor bzw. dessen Rotorblättern 22 orientiert.

Gemäß einem weiteren Ausführungsbeispiel, das in Fig. 15 im Querschnitt gezeigt ist, weist der Querstromrotor 12 eine Rotordrehachse 66 auf, wobei die Rotorblätter 22 an einer mitrotierenden Tragstruktur 68 gehalten sind, die an der Rotordrehachse 66 befestigt ist. Die Rotorblätter sind, bezogen auf die tangentiale Winkellage, feststehend ausgebildet.

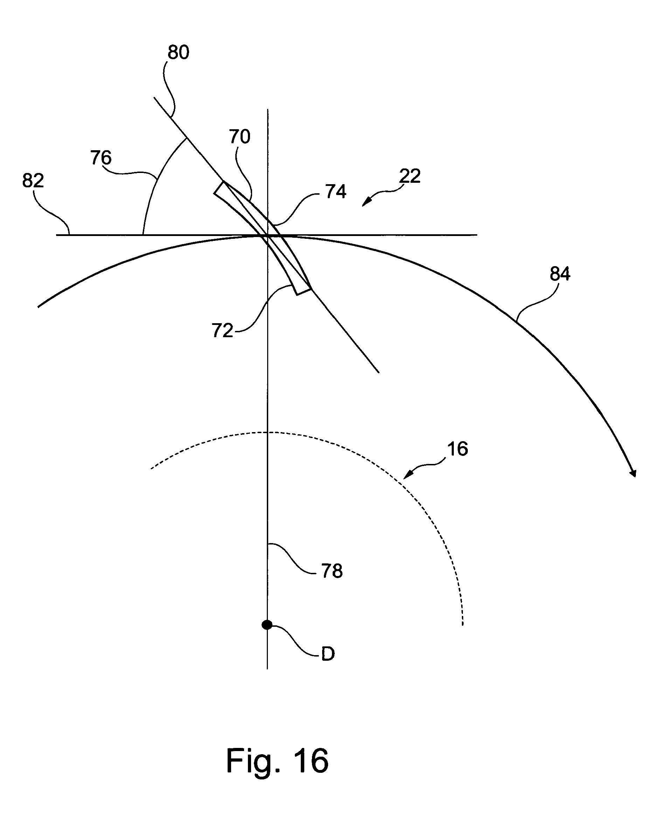

Gemäß dem in Fig. 16 gezeigten Ausführungsbeispiel weisen die Rotorblätter 22 im Querschnitt jeweils eine gebogene Form 70 auf, mit einer konkaven Seite 72 und einer konvexen Seite 74. Wie zu erkennen ist, ist die konkave Seite 72 dem Magnusrotor 16 zugewandt, der in Fig. 16 nur gestrichelt angedeutet ist. Die Rotorblätter 22 weisen im Querschnitt einen Winkel von 15° bis 70°, vorzugsweise 30° zur Radialrichtung auf. Der Begriff Radialrichtung bezieht sich auf eine Verbindungslinie 78 zwischen der Rotorachse D und der Mitte des Querschnitts des Rotorblatts 22. Die Richtung im Querschnitt bezieht sich bei einer gebogenen Querschnittsform, wie die gebogene Form 70, auf die Tangentialrichtung, welche mit einer Linie 80 angedeutet ist. Die Tangentialrichtung ist mit einer Linie 82 angedeutet, die tangential zu einer Kreislinie 84 verläuft, auf der sich das Rotorblatt 22 bewegt. Daraus ergibt sich nun der Winkel, angedeutet mit Bezugszeichen 76, zwischen der Linie 80 und der Tangentiallinie 82.

Es sei darauf hingewiesen, dass die Darstellungen des Querstromrotors, insbesondere der Rotorblätter 22 schematisch sind, insbesondere hinsichtlich der Größenverhältnisse und Anzahl.

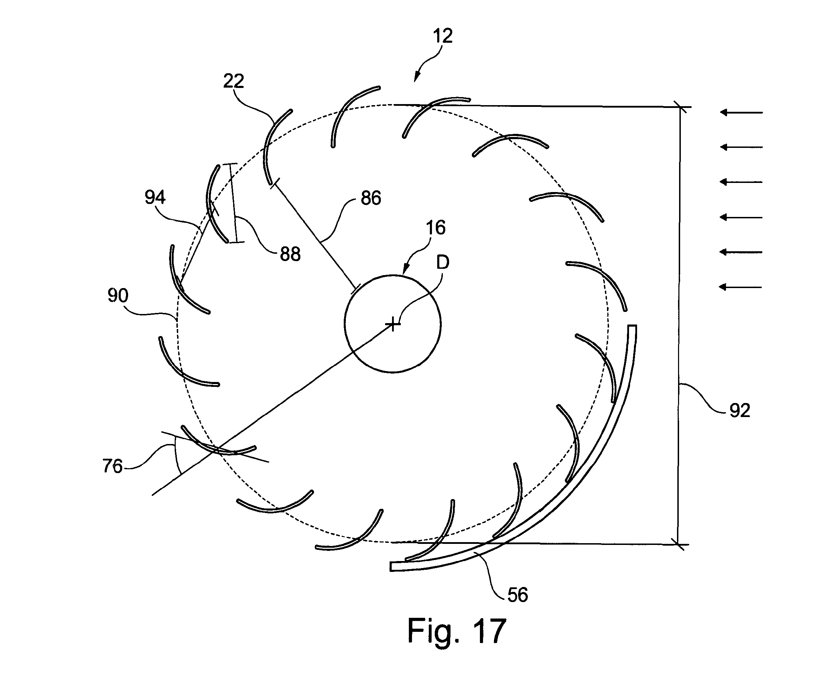

Gemäß einem weiteren Aspekt der Erfindung sind mindestens zwei, vorzugsweise 16 Rotorblätter 22 vorgesehen, wie dies in Fig. 17 gezeigt ist.

Gemäß einem Aspekt der Erfindung (nicht näher gezeigt), ist zwischen der Mantelfläche des Magnusrotors und den rotierenden Rotorblättern in radialer Richtung ein Abstand vorgesehen, der vom Durchmesser des Magnusrotors abhängig ist.

Beispielsweise ist der Durchmesser des Magnusrotors genauso groß bis doppelt so groß wie der Abstand der Mantelfläche zu den Rotorblättern.

Gemäß einem weiteren Beispiel beträgt das Verhältnis von Durchmesser des Magnusrotors und Abstand zu den Rotorblättern 2 : 1.

Ein weiteres Beispiel ist in Fig. 17 gezeigt. Zwischen der Mantelfläche des Magnusrotors 16 und den rotierenden Rotorblättern 22 ist in radialer Richtung ein Abstand 86 vorgesehen, der das Ein- bis Zweifache einer Profiltiefe 88 eines Rotorblatts beträgt, wobei die Profiltiefe unabhängig von der Winkellage gemessen wird.

Wie bereits erwähnt, beträgt der Abstand gemäß einem weiteren Beispiel , abweichend von Fig. 17, das einfache bis halbe Maß des Durchmessers des Magnuskörpers 16.

Außerdem ist in Fig. 17 ein weiterer Aspekt gezeigt, nach dem die Rotorblätter 22 des Querstromrotors 12 entlang einer Kreislinie 90 um die Drehachse angeordnet sind, wobei der Kreis 90 einen Durchmesser 92 aufweist, der das Fünf- bis Achtfache der Profiltiefe eines Rotorblatts 22 beträgt.

Die Rotorblätter 22 weisen zueinander einen Umfangsabstand 94 auf, der mindestens so groß ist wie die Profiltiefe der Rotorblätter.

Die Profiltiefe, der Umfangsabstand sowie die Anzahl der Rotorblätter sind beispielsweise im Prinzip frei wählbar. Daraus ergibt sich dann beispielsweise bei Anwendung des bevorzugten Verhältnisses "Abstand / Durchmesser Magnuskörper" der Durchmesser des Magnuskörpers und der Abstand zwischen den Rotorblättern und der Mantelfläche des Magnuskörpers.

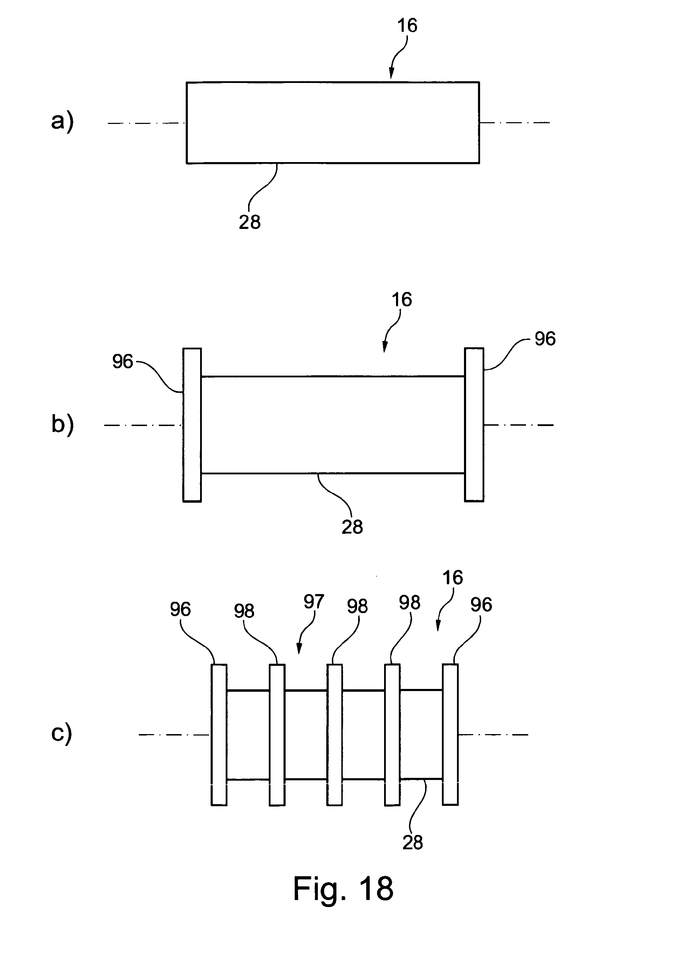

Gemäß einem weiteren Ausführungsbeispiel ist der Magnusrotor 16 ein Zylinder, dessen Mantelfläche 28 in Fig. 18a dargestellt ist.

Gemäß einem weiteren Aspekt, der in Fig. 18b gezeigt ist, weist der Magnusrotor 16 im Bereich seiner Enden jeweils eine über die Magnusrotorfläche hinausstehende Endscheibe 96 auf.

In einer weiteren Ausführungsform weist der Magnusrotor 16 eine Vielzahl 97 von Scheiben 98 auf, die zwischen den beiden Endscheiben 96 angeordnet sind, wobei die Scheiben einen größeren Durchmesser aufweisen als die benachbarten Mantelflächensegmente der Mantelfläche 28 (siehe Fig. 18c).

Gemäß einem nicht gezeigten Aspekt kann die Vielzahl von Scheiben auch ohne die beiden Endscheiben vorgesehen sein.

Mit Bezug zu Fig. 9 soll im Folgenden auf die Wirkungsweise des Magnusrotors 16 eingegangen werden. Wie bereits erwähnt, bewirkt die Leitvorrichtung 14 eine teilweise Abschirmung des Querstromrotors, so dass die Rotorblätter 22 durch den in Fig. 9 von links anströmenden Wind in Uhrzeigerrichtung angetrieben werden können, wobei sie beim Drehen gegen die Windrichtung durch die Leitvorrichtung 14 abgeschirmt werden.

Wenn nun der innerhalb des Querstromrotors 12 vorgesehene Magnusrotor 16 ebenfalls in Uhrzeigerrichtung angetrieben wird, was in Fig. 9 schematisch durch einen Drehpfeil 55 angedeutet ist, führt dies dazu, dass der Magnusrotor 16 bei Rotation auf seiner Leeseite, d.h. in Fig. 9 rechts des Magnusrotors 16, mit Bezug zur Anströmrichtung eine Umlenkung des Luftstroms bewirkt, was durch die in diesem Bereich verändert verlaufenden Strömungspfeile angedeutet ist (mit Bezugszeichen 56 markiert).

Die Umlenkung 56 erfolgt ab einer Umfangsgeschwindigkeit des Magnusrotors, die vorzugsweise größer als die Anströmgeschwindigkeit des Windkraft-Hybridrotors ist.

In Fig. 9 ist die Umfangsgeschwindigkeit des Magnusrotors 16 mit dem Bewegungspfeil 55 angedeutet, die Anströmgeschwindigkeit, d.h. die Windgeschwindigkeit, ist mit dem Windpfeil 60 angedeutet. Wie gut zu erkennen ist, erfolgt die Umlenkung derart, dass ein den Querstromrotor durchströmender Luftstrom auf die Rotorblätter 22 in einem erweiterten Kreisbogen 62 einwirkt und dabei die Rotorblätter 22 , d.h. den Querstromrotor antreibt.

Gemäß einem weiteren Aspekt der Erfindung bewirkt die Umlenkung, dass der den Querstromrotor 12 durchströmende Luftstrom auf die Rotorblätter 22 in einem zusätzlichen Kreisbogensegment 64 von bis zu ca. 90° einwirkt.

Insgesamt steht also für den Antrieb des Querstromrotors durch den Wind eine längere Wegstrecke zur Verfügung, d.h., es wird eine effizientere Ausnutzung der Windenergie ermöglicht.

Beispielsweise weist der Querstromrotor 12 eine Umfangsgeschwindigkeit, angedeutet mit einem Rotationspfeil 58, auf, die ca. 50% der Anströmgeschwindigkeit des Windkraft-Hybridrotors beträgt.

Gemäß einem weiteren Aspekt der Erfindung beträgt das Rotationsverhältnis zwischen dem Querstromrotor 12 und dem Magnusrotor 16 ca. 1:2 bis 1:8.

Gemäß einem weiteren Aspekt der Erfindung ergibt dies ein Verhältnis von Anströmgeschwindigkeit des Windkraft-Hybridrotors / Umfangsgeschwindigkeit des Querstromrotors / Umfanggeschwindigkeit des Magnusrotors von ca. 0,5 / 1 / 1-4.

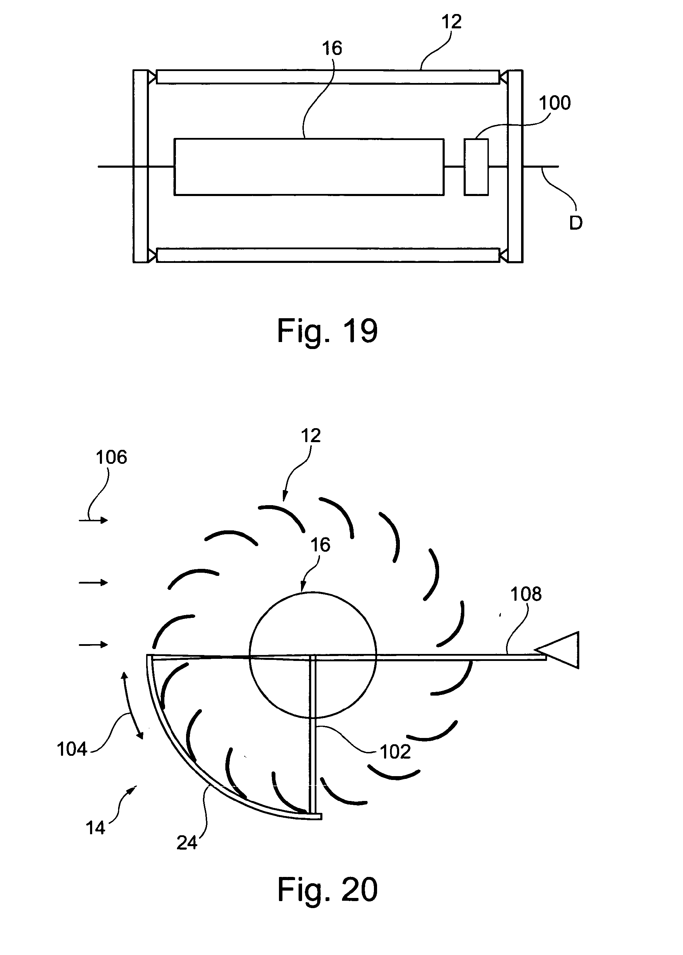

Beispielsweise kann zwischen dem Querstromrotor 12 und dem Magnusrotor 16 ein Getriebe 100 vorgesehen sein, was in Fig. 19 schematisch angedeutet ist. Das Getriebe kann beispielsweise ein stufenloses oder in Stufen veränderbares Übersetzungsverhältnis haben.

Gemäß einem weiteren Ausführungsbeispiel, das jedoch nicht näher gezeigt ist, stellt der Querstromrotor 12 Energie zur Verfügung, um den Magnusrotor 16 anzutreiben. Beispielsweise kann dies mit einer elektrischen Antriebslösung erfolgen, was jedoch nicht näher gezeigt ist.

Bei einer elektrischen Antriebslösung des Magnusrotors 16 kann der Magnusrotor 16 beispielsweise auch zum Anlaufen des Windkraft-Hybridrotors 10 elektrisch angetrieben werden, um ein Anlaufen auch bei geringeren Windverhältnissen zu ermöglichen.

Gemäß einem weiteren Aspekt der Erfindung weist das Gehäusesegment 24 einen Verstellmechanismus 102 auf und ist wenigstens mit Bezug zur Drehachse des Querstromrotors 12 verschwenkbar ausgebildet. Dies ist in Fig. 20 mit einem Doppelpfeil 104 für die Verschwenkung angedeutet. Damit ist es möglich, bei einer Anströmrichtung, die von der in Fig. 20 mit den Pfeilen 106 angedeuteten Richtung abweicht, das Gehäusesegment 24 derart auszurichten, dass es den Querstromrotor 12 mit Bezug zur Drehachse des Querstromrotors auf der Luvseite auf einer Seite der Drehachse abschirmt.

Beispielsweise weist der Verstellmechanismus 102 einen Windsensor auf, der in Fig. 20 schematisch durch eine Windfahne 108 angedeutet ist, die mit dem Verstellmechanismus gekoppelt ist. Der Windsensor erlaubt ein Nachfahren bei sich ändernder Windrichtung.

Bei horizontaler Anordnung (nicht näher gezeigt) der Rotationsachsen ermöglicht der Verstellmechanismus die Ausnutzung von zwei gegensätzlichen Windrichtungen, wie dies z.B. oftmals in Küstennähe auftritt. Bis zu einem gewissen Maß kann der Querstromrotor auch schräg angeströmt werden. Wenn sich die Windrichtung zu stark ändert, z.B. um mehr als 30° kann ein Ausrichtmechanismus vorgesehen sein, mit dem sich die Anlage horizontal verschwenken lässt.

Gemäß einem weiteren Aspekt der Erfindung kann auch ein Messfühler vorgesehen sein, mit dem die Windrichtung erfasst wird, und ein Aktuator angesteuert werden, der eine Verschwenkung bzw. ein Einstellen des Gehäusesegments in Abhängigkeit der Windrichtung durchführt.

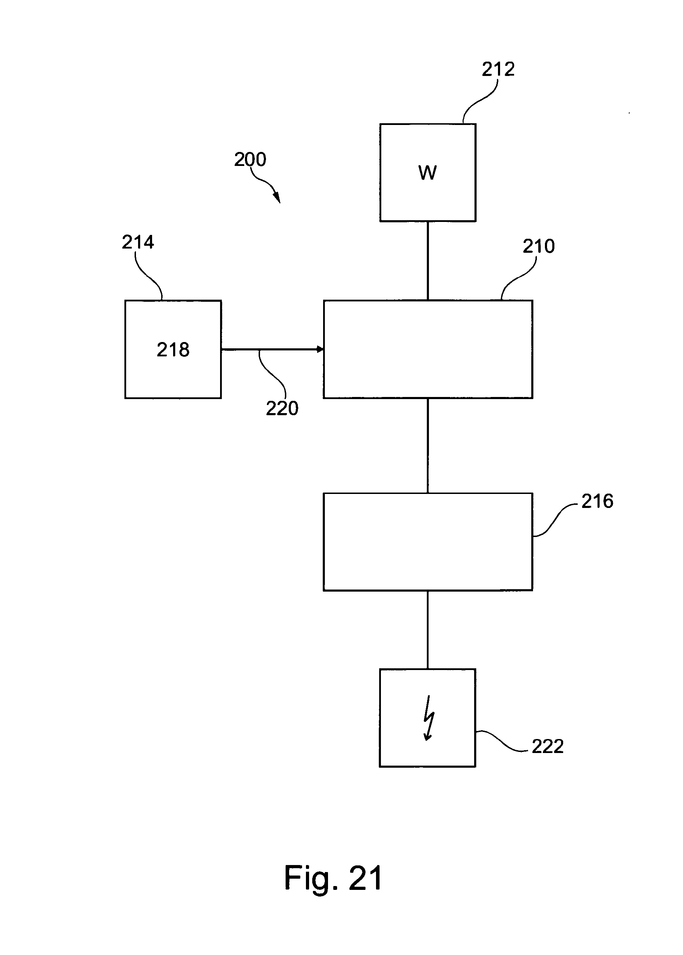

In Fig. 21 ist schematisch ein Verfahren 200 zum Umwandeln von Windenergie in Antriebsenergie zur Verrichtung von Arbeit gezeigt, welches die folgenden Schritte umfasst:
- Rotieren eines Querstromrotors in einem ersten Rotationsvorgang 210, wobei der Querstromrotor um eine Drehachse drehend gehalten ist und eine Vielzahl von axial verlaufenden Rotorblättern aufweist. Dabei ist eine Leitvorrichtung vorgesehen, die ein Gehäusesegment aufweist, das den Querstromrotor in Umfangsrichtung teilweise derart umgibt, dass der Querstromrotor durch anströmenden Wind angetrieben wird, was schematisch mit Bezugszeichen 212 angedeutet ist.
- Rotieren eines Magnusrotors in einem weiteren Rotationsvorgang 214, der innerhalb des Querstromrotors angeordnet ist und dessen Magnusrotorachse in Richtung der Drehachse verläuft. Der Magnusrotor weist dabei eine geschlossene Mantelfläche auf und wird durch eine Antriebsvorrichtung um die Magnusrotorachse angetrieben.
- Antreiben einer Antriebsvorrichtung in einem Antriebsvorgang 216 durch den Querstromrotor.

Gemäß der Erfindung lenkt der Magnusrotor den Luftstrom in dem weiteren Rotationsvorgang 214 auf seiner Leeseite mit Bezug zur Anströmrichtung in einem Umlenkungsvorgang 218 derart um, dass der den Querstromrotor durchströmende Luftstrom in dem ersten Rotationsvorgang 210 auf die Rotorblätter in einem erweiterten Kreisbogen einwirkt, was durch einen Wirkungspfeil 220 vom zweiten Rotationsvorgang 214 zu dem ersten Rotationsvorgang 210 angedeutet ist.

Beispielsweise erfolgt das Umlenken durch Rotieren ab einer Umfangsgeschwindigkeit, die größer als die Anströmgeschwindigkeit des Windkraft-Hybridrotors ist.

Der erste Rotationsvorgang 210 wird auch Schritt oder Vorgang a) bezeichnet, der weitere Rotationsvorgang 214 als Schritt oder Vorgang b) und der Antriebsvorgang 216 als Schritt oder Vorgang c).

Die Schritte a), b) und c) finden gleichzeitig statt.

Bei dem Antreiben der Arbeitsvorrichtung kann es sich beispielsweise um die Erzeugung elektrischer Energie handeln, was in Fig. 21 schematisch durch den Ausgabevorgang 222 dargestellt ist.

Gemäß einem weiteren Aspekt der Erfindung, der jedoch nicht näher gezeigt ist, kann statt des elektrischen Strom, oder auch in Ergänzung zur Erzeugung elektrischen Stroms, die zur Verfügung gestellte Antriebsleistung aus dem Schritt 216 zu anderen Arbeiten verwendet werden, beispielsweise zum Pumpen von Wasser oder zu diversen Mühlenarbeiten.

Die oberhalb beschriebenen Ausführungsbeispiele können in unterschiedlicher Art und Weise kombiniert werden. Insbesondere können auch Aspekte der Vorrichtungen für Ausführungsformen des Verfahrens sowie Verwendung der Vorrichtungen verwendet werden und umgekehrt.

## Patentansprüche

1. Windkraft-Hybridrotor (10), mit
- einem Querstromrotor (12); und
- einer Leitvorrichtung (14);
wobei der Querstromrotor um eine Drehachse D (18) drehend gehalten ist und eine Vielzahl (20) von axial verlaufenden Rotorblättern (22) aufweist;
wobei die Leitvorrichtung ein Gehäusesegment (24) aufweist, das den Querstromrotor in Umfangsrichtung teilweise derart umgibt, dass der Querstromrotor durch anströmenden Wind *W* (26) antreibbar ist;
**dadurch gekennzeichnet, dass**
der Windkraft-Hybridrotor einen Magnus-Rotor (16) aufweist;
wobei der Magnus-Rotor innerhalb des Querstromrotors angeordnet ist; wobei die Magnus-Rotorachse in Richtung der Drehachse verläuft; wobei der Magnus-Rotor eine geschlossene Mantelfläche (28) aufweist und durch eine Antriebsvorrichtung (30) um die Magnus-Rotorachse drehend antreibbar ist; und
wobei der Magnus-Rotor im Betrieb eine Relativbewegung zwischen der Oberfläche des Magnuskörpers und einer Kombinationsströmung mit einer Querum- bzw. Queranströmung und einer Zirkulationsströmung aufweist.

2. Windkraft-Hybridrotor nach Anspruch 1, wobei der Magnus-Rotor bei Rotation auf seiner Lee-Seite mit Bezug zur Anströmrichtung eine Umlenkung (56) des Luftstroms bewirkt.

3. Windkraft-Hybridrotor nach Anspruch 1 oder 2, wobei die Umlenkung derart erfolgt, dass ein den Querstromrotor durchströmender Luftstrom auf die Rotorblätter in einem erweiterten Kreisbogen (62) einwirkt und diese antreibt.

4. Windkraft-Hybridrotor nach Anspruch 1, 2, oder 3, wobei die Rotorblätter im Querschnitt jeweils eine gebogene Form (70) mit einer konkaven (72) und einer konvexen (74) Seite aufweisen; wobei die konkave Seite dem Magnus-Rotor zugewandt ist.

5. Windkraft-Hybridrotor nach einem der vorhergehenden Ansprüche, wobei der Magnus-Rotor mit einer Umfangsgeschwindigkeit angetrieben ist, die das ca. einbis vierfache der Anströmgeschwindigkeit des Windkraft-Hybridrotors beträgt.

6. Windkraft-Hybridrotor nach einem der vorhergehenden Ansprüche, wobei der Querstromrotor den Magnus-Rotor antreibt.

7. Windkraft-Hybridrotor nach einem der vorhergehenden Ansprüche, wobei das Gehäusesegment einen Verstellmechanismus (102) aufweist und wenigstens mit Bezug zur Drehachse des Querstromrotors verschwenkbar (104) ausgebildet ist; wobei der Verstellmechanismus in Abhängigkeit einer Anströmrichtung (106) derart einstellbar ist, dass das Gehäusesegment den Querstromrotor mit Bezug zur Drehachse des Querstromrotors auf der Luvseite auf einer Seite der Drehachse abschirmt.

8. Windkraftanlage (110), aufweisend:
- eine Rotoreinrichtung (111) zur Umwandlung von Windbewegung in eine Drehbewegung;
- eine Arbeitsvorrichtung (112) zur Umwandlung der Bewegungsenergie der Drehbewegung in zu verrichtende Arbeit (114); und
- eine Getriebevorrichtung (116) zur Kopplung der Rotoreinrichtung an die Arbeitsvorrichtung zur Übertragung der Drehbewegung an die Arbeitsvorrichtung;
wobei die Rotoreinrichtung wenigstens einen Windkraft-Hybridrotor (10) nach einem der vorhergehenden Ansprüche aufweist.

9. Windkraftanlage nach Anspruch 8, wobei als Arbeitsvorrichtung ein Stromgenerator zur Erzeugung elektrischer Energie vorgesehen ist.

10. Windkraftanlage nach Anspruch 8 oder 9, wobei als Arbeitsvorrichtung eine Pumpeneinrichtung vorgesehen ist.

11. Verwendung eines Windkraft-Hybridrotors nach einem der Ansprüche 1 bis 7 in einer Windkraftanlage.

12. Verfahren (200) zum Umwandeln von Windenergie in Antriebsenergie zur Verrichtung von Arbeit, umfassend die folgenden Schritte:
a) Rotieren (210) eines Querstromrotors, der um eine Drehachse drehend gehalten ist und eine Vielzahl von axial verlaufenden Rotorblättern aufweist; wobei eine Leitvorrichtung vorgesehen ist, die ein Gehäusesegment aufweist, das den Querstromrotor in Umfangsrichtung teilweise derart umgibt, dass der Querstromrotor durch anströmenden Wind angetrieben (212) wird;
b) Rotieren (214) eines Magnus-Rotors, der innerhalb des Querstromrotors angeordnet ist und dessen Magnus-Rotorachse in Richtung der Drehachse verläuft; wobei der Magnus-Rotor eine geschlossene Mantelfläche aufweist und durch eine Antriebsvorrichtung um die Magnus-Rotorachse angetrieben wird; wobei der Magnus-Rotor im Betrieb eine Relativbewegung zwischen der Oberfläche des Magnuskörpers und einer Kombinationsströmung mit einer Querum- bzw. Queranströmung und einer Zirkulationsströmung aufweist; und
c) Antreiben (216) einer Arbeitsvorrichtung durch den Querstromrotor;
wobei der Magnus-Rotor in Schritt b) auf seiner Lee-Seite mit Bezug zur Anströmrichtung den Luftstrom derart umlenkt (218), dass der den Querstromrotor durchströmende Luftstrom in Schritt a) auf die Rotorblätter in einem erweiterten Kreisbogen einwirkt (220).

## Claims

1. Wind energy hybrid rotor (10) having
- a transverse-flow rotor (12) and
- a guide device (14);
wherein the transverse-flow rotor is held so as to be able to rotate about an axis of rotation D (18) and has a multiplicity (20) of axially oriented rotor blades (22);
wherein the guide device has a housing segment (24) which partially surrounds the transverse-flow rotor in the circumferential direction such that the transverse-flow rotor can be driven by incident wind W (26);
**characterized in that**
the wind energy hybrid rotor has a Magnus rotor (16) ;
wherein the Magnus rotor is arranged within the transverse-flow rotor; wherein the Magnus rotor axis runs in the direction of the axis of rotation; wherein the Magnus rotor has a closed cylinder surface (28) and can be driven in rotation by a drive device (30) around the Magnus rotor axis; and
wherein the Magnus rotor has, in operation, a relative movement between the surface of the Magnus body and a combined flow with a transverse peripheral flow or transverse incident flow and a circulation flow.

2. Wind energy hybrid rotor according to Claim 1, wherein, during rotation, the Magnus rotor deflects (56) the airflow on its leeward side with respect to the incident flow direction.

3. Wind energy hybrid rotor according to Claim 1 or 2, wherein the deflection occurs such that an airflow flowing through the transverse-flow rotor acts on the rotor blades over an extended circular arc (62) and drives these.

4. Wind energy hybrid rotor according to Claim 1, 2 or 3, wherein the rotor blades have in each case a cross section which is curved (70) with a concave side (72) and a convex side (74); wherein the concave side is oriented towards the Magnus rotor.

5. Wind energy hybrid rotor according to one of the preceding claims, wherein the Magnus rotor is driven with a circumferential speed which is approximately one to four times the incident flow speed of the wind energy hybrid rotor.

6. Wind energy hybrid rotor according to one of the preceding claims, wherein the transverse-flow rotor drives the Magnus rotor.

7. Wind energy hybrid rotor according to one of the preceding claims, wherein the housing segment has an adjustment mechanism (102) and is designed so as to be able to pivot (104) at least with respect to the axis of rotation of the transverse-flow rotor; wherein the adjustment mechanism can be set as a function of an incident flow direction (106) such that the housing segment shields the transverse-flow rotor with respect to the axis of rotation of the transverse-flow rotor on the windward side on one side of the axis of rotation.

8. Wind turbine (110) having:
- a rotor device (111) for converting wind movement into rotational movement;
- a working device (112) for converting the movement energy of the rotational movement into work (114) to be performed; and
- a gear device (116) for coupling the rotor device to the working device for transmitting the rotational movement to the working device;
wherein the rotor device has at least one wind energy hybrid rotor (10) according to one of the preceding claims.

9. Wind turbine according to Claim 8, wherein an electricity generator for generating electrical energy is provided as the working device.

10. Wind turbine according to Claim 8 or 9, wherein a pump device is provided as the working device.

11. Use of a wind energy hybrid rotor according to one of Claims 1 to 7 in a wind turbine.

12. Method (200) for converting wind energy into drive energy for performing work, comprising the following steps:
a) rotating (210) a transverse-flow rotor which is held rotatably about an axis of rotation and has a multiplicity of axially oriented rotor blades; wherein there is provided a guide device which has a housing segment that partially surrounds the transverse-flow rotor in the circumferential direction such that the transverse-flow rotor is driven (212) by incident wind;
b) rotating (214) a Magnus rotor which is arranged within the transverse-flow rotor and whose Magnus rotor axis runs in the direction of the axis of rotation; wherein the Magnus rotor has a closed cylinder surface and is driven by a drive device about the Magnus rotor axis; wherein the Magnus rotor has, in operation, a relative movement between the surface of the Magnus body and a combined flow with a transverse peripheral flow or transverse incident flow and a circulation flow; and
c) driving (216) a working device by means of the transverse-flow rotor; wherein in step b) the Magnus rotor deflects (218) the airflow on its leeward side with respect to the incident flow direction such that the airflow flowing through the transverse-flow rotor in step a) acts on the rotor blades over an extended circular arc (220).

## Revendications

1. Rotor hybride à énergie éolienne (10), avec
- un rotor à courant transversal (12); et
- un dispositif de guidage (14);
dans lequel le rotor à courant transversal est monté de façon rotative autour d'un axe de rotation D (18) et présente une multiplicité (20) de pales de rotor (22) orientées axialement;
dans lequel le dispositif de guidage présente un segment de boîtier (24), qui entoure partiellement le rotor à courant transversal en direction périphérique, de telle manière que le rotor à courant transversal puisse être entraîné par le vent entrant W (26); **caractérisé en ce que**
le rotor hybride à énergie éolienne présente un rotor Flettner (16);
dans lequel le rotor Flettner est disposé à l'intérieur du rotor à courant transversal; dans lequel l'axe du rotor Flettner s'étend dans la direction de l'axe de rotation; dans lequel le rotor Flettner présente une enveloppe latérale fermée (28) et peut être entraîné en rotation autour de l'axe du rotor Flettner par un dispositif d'entraînement (30); et
dans lequel le rotor Flettner présente en fonctionnement un mouvement relatif entre la surface du corps Flettner et un écoulement combiné avec un écoulement transversal périphérique ou entrant et un écoulement de circulation.

2. Rotor hybride à énergie éolienne selon la revendication 1, dans lequel le rotor Flettner provoque lors de la rotation une déviation (56) du courant d'air sur son côté sous le vent par rapport à la direction d'entrée.

3. Rotor hybride à énergie éolienne selon la revendication 1 ou 2, dans lequel la déviation se produit de telle manière qu'un courant d'air traversant le rotor à courant transversal agisse sur les pales du rotor et les entraîne suivant un arc de cercle étendu (62).

4. Rotor hybride à énergie éolienne selon la revendication 1, 2 ou 3, dans lequel les pales du rotor présentent en section transversale une forme incurvée (70) avec un côté concave (72) et un côté convexe (74), dans lequel le côté concave est tourné vers le rotor Flettner.

5. Rotor hybride à énergie éolienne selon l'une quelconque des revendications précédentes, dans lequel le rotor Flettner est entraîné avec une vitesse périphérique, qui vaut environ une à quatre fois la vitesse d'entrée du rotor hybride à énergie éolienne.

6. Rotor hybride à énergie éolienne selon l'une quelconque des revendications précédentes, dans lequel le rotor à courant transversal entraîne le rotor Flettner.

7. Rotor hybride à énergie éolienne selon l'une quelconque des revendications précédentes, dans lequel le segment de boîtier présente un mécanisme de réglage (102) et peut pivoter au moins par rapport à l'axe de rotation du rotor à courant transversal; dans lequel le mécanisme de réglage est réglable en fonction de la direction d'entrée (106), de telle manière que le segment de boîtier protège le rotor à courant transversal sur un côté de l'axe de rotation sur le côté au vent par rapport à l'axe de rotation du rotor à courant transversal.

8. Installation à énergie éolienne (110), présentant:
- un dispositif de rotor (111) pour la conversion du mouvement du vent en un mouvement de rotation;
- un dispositif de travail (112) pour la conversion de l'énergie cinétique du mouvement de rotation en travail à produire (114); et
- un dispositif de transmission (116) pour le couplage du dispositif de rotor au dispositif de travail pour la transmission du mouvement de rotation au dispositif de travail;
dans laquelle le dispositif de rotor présente au moins un rotor hybride à énergie éolienne (10) selon l'une quelconque des revendications précédentes.

9. Installation à énergie éolienne selon la revendication 8, dans laquelle il est prévu comme dispositif de travail un générateur de courant pour la production d'énergie électrique.

10. Installation à énergie éolienne selon la revendication 8 ou 9, dans laquelle il est prévu comme dispositif de travail un dispositif de pompe.

11. Utilisation d'un rotor hybride à énergie éolienne selon l'une quelconque des revendications 1 à 7 dans une installation à énergie éolienne.

12. Procédé (200) pour convertir de l'énergie éolienne en énergie motrice pour la production de travail, comprenant les étapes suivantes:
a) faire tourner (210) un rotor à courant transversal, qui est monté de façon rotative autour d'un axe de rotation et présente une multiplicité de pales de rotor orientées axialement; dans lequel il est prévu un dispositif de guidage, qui présente un segment de boîtier qui entoure partiellement le rotor à courant transversal en direction périphérique, de telle manière que le rotor à courant transversal soit entraîné par le vent entrant (212);
b) faire tourner (214) un rotor Flettner, qui est disposé à l'intérieur du rotor à courant transversal et dont l'axe de rotor Flettner s'étend dans la direction de l'axe de rotation; dans lequel le rotor Flettner présente une enveloppe latérale fermée et est entraîné par un dispositif d'entraînement autour de l'axe du rotor Flettner; dans lequel le rotor Flettner présente en fonctionnement un mouvement relatif entre la surface du corps Flettner et un écoulement combiné avec un écoulement transversal périphérique ou entrant et un écoulement de circulation; et
c) entraîner (216) un dispositif de travail par le rotor à courant transversal;
dans lequel le rotor Flettner dévie à l'étape b) le courant d'air sur son côté sous le vent par rapport à la direction d'entrée du courant d'air, de telle manière (218) que le courant d'air traversant le rotor à courant transversal à l'étape a) agisse sur les pales du rotor suivant un arc de cercle étendu (220).
